**Europäisches Patentamt**

**European Patent Office**

**Office européen des brevets**

(19)

(11) Veröffentlichungsnummer: **0 170 141**
**B1**

(12) # EUROPÄISCHE PATENTSCHRIFT

(45) Veröffentlichungstag der Patentschrift:
**18.05.88**

(51) Int. Cl.⁴: **B 29 D 11/00**

(21) Anmeldenummer: **85108783.3**

(22) Anmeldetag: **13.07.85**

(54) **Verfahren zur Herstellung eines Kontaktlinsen-Halbfertigzeugs.**

(30) Priorität: **28.07.84 DE 3427887**

(43) Veröffentlichungstag der Anmeldung:
**05.02.86 Patentblatt 86/6**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**EP-A-0 131 227**
**CH-A-280 552**
**DE-A-2 729 385**
**GB-A-819 474**
**GB-A-1 174 682**

(73) Patentinhaber: **BAYER AG, Konzernverwaltung RP Patentabteilung, D-5090 Leverkusen 1 Bayerwerk (DE)**

(72) Erfinder: **Geyer, Otto- Christian, Dr., Bahnhofstrasse 12, D-6330 Wetzlar (DE)**
Erfinder: **Wingler, Frank, Dr., Walter- Flex- Strasse 17, D-5090 Leverkusen 1 (DE)**

**Beschreibung**

Die vorliegende Erfindung geht aus von einem Verfahren zur Herstellung eines Kontaktlinsen-Halbfertigzeugs durch thermische Verformung von thermoplastischen Materialien.

Ein Verfahren zur Herstellung von Linsenrohlingen durch thermische Verformung von thermoplastischen Kunststoffen ist in DE-A-27 29 385 beschrieben. Bei der Verformung wird hierbei überflüssiger thermoplastischer Kunststoff in die Formteile gedrückt, so daß Formansätze entstehen, die später entfernt werden müssen. Dieses Verfahren läßt sich nicht ohne weiteres auf die Herstellung von Kontaktlinsen-Halbfertigzeugen übertragen. Ferner ist aus GB-A-11 74 682, auf welcher der Oberbegriff des Anspruchs 1 basiert, ein Verfahren zur Herstellung von Kontaktlinsen bekannt, bei dem in einem ersten Schritt durch thermoplastische Verformung eine sphärische Kontaktlinse hergestellt wird, die dann in einem zweiten Schritt getempert wird. Bei dem Temperprozeß werden die ursprünglich sphärischen Flächen aufgrund mechanischer Relaxationseffekte in asphärische Flächen umgewandelt.

Die ophthalmologische Forschung der letzten Jahre hat gezeigt, daß die Verträglichkeit einer Kontaktlinse oder -schale nicht nur von der Natur des polymeren Materials, aus dem sie hergestellt wurde, sondern ganz entscheidend von der Innengeometrie der dem Auge zugewandten Seite und deren Stabilität abhängig ist. Man bevorzugt heute Kontaktlinsen, welche asphärische Innenflächen mit definierten Abflachungen zum Rand hin aufweisen. So wird erreicht, daß die Kontaktlinse auf einem Tränenflüssigkeitsfilm schwimmt, der bei Lid- und Augenbewegungen fließt und somit einen Austausch von Nährstoffen und einen Abtransport von Metaboliten gewährleistet. Im folgenden sollen unter dem Sammelbegriff "Kontaktlinsen" jeweils Linsen und Schalen verstanden werden.

Von thermoplastischen Materialien zur Herstellung von Kontaktlinsen wird daher nicht nur eine ausgezeichnete Biokompatibilität, sondern auch eine hohe Formstabilität über längere Tragezeitdauern hinweg erwartet. Ein in der Praxis häufig verwendeter Herstellprozeß für kontaktoptische Gegenstände ist das Prägen, Drehen und Polieren aus Knöpfen (sogenannten Blanks), die in etwa schon den Durchmesser der gewünschten Kontaktlinse besitzen. Von kontaktoptischen Gegenständen wird von der Augenmedizin gefordert, daß sie eine Oberflächenrauhtiefe von unter 0,1 µm, bevorzugt unter 0,05 µm besitzen. Darüber hinaus sollen die Krümmungsradien der sphärischen Grundkurve der üblichen Innenflächen-Geometrien, die in der Größenordnung um 8 mm liegen, sich im Laufe der Tragezeit einer Kontaktlinse um weniger als ± 0,02 mm ändern. Bedenkt man, daß eine moderne Kontaktlinse an ihren Randzonen nur noch eine Dicke von etwa 0,12 mm aufweist, so wird verständlich, daß die geforderten Toleranzen für die Innenflächen nur unter Anwendung technisch sehr aufwendiger und zeitraubender Dreh- und Polierverfahren einzuhalten sind.

Ziel der Erfindung war es nun, einen neuen Herstellweg über Kontaktlinsen-Halbfertigzeuge aus thermoplastischen Polymeren zu finden, aus denen sich mit geringem Aufwand weitgehend verspannungsfreie Kontaktlinsen mit hoher Stabilität auch komplizierter Innengeometrien herstellen lassen.

Die Aufgabe wird erfindungsgemäß dadurch gelöst, ·

a) daß man zunächst aus dem thermoplastischen Material einen zylindrischen Knopf herstellt, dessen Gewicht weitgehend jenem des herzustellenden Halbfertigzeugs entspricht.

b) daß man den Knopf anschließend in ein abgeschlossenes, mit zwei einander gegenüberstehenden, in einer Hülse geführten Stempeln versehenes Preßwerkzeug einbringt, wobei der eine Stempel eine konvex gekrümmte, asphärische Oberfläche entsprechend der Innenfläche der herzustellenden Kontaktlinse aufweist und

c) daß man den Knopf im Preßwerkzeug unter Druck oberhalb der Glasübergangstemperatur des thermoplastischen Materials zu dem Kontaktlinsen-Halbfertigzeug mit vollständig ausgebildeter asphärischer Rückfläche umformt.

Der zylindrische Knopf kann nach herkömmlichen Methoden der Kunststoffverarbeitung wie z. B. Spritzgießen, Prägen, Stanzen, Pressen oder Schneiden hergestellt werden. Ausgehend von den so hergestellten Halbfertigzeugen müssen zur Herstellung von fertigen Kontaktlinsen nur noch die den Scheitelbrechwerten entsprechenden Stirnflächengeometrien durch Drehen und Polieren aufgebracht werden. Solche Kontaktlinsen zeichnen sich durch eine hohe Verspannungsfreiheit sowie durch eine besonders hohe mechanische Stabilität der Radien und Geometrien der Basiskurven aus.

Bevorzugte Ausführungsformen des erfindungsgemäßen Verfahrens sind in den Unteransprüchen beschrieben.

Als thermoplastische Materialien können alle an sich für Kontaktlinsen bekannten halbharten bis harten organischen Polymeren z. B. auf der Basis von Celluloseestern, Polycarbonaten, Polyamiden, Polyestern, Homo- und Copolymerisaten von Vinylpyrrolidon, Methacryl- und Acrylsäureestern bzw. Polymerblends auf Basis dieser Polymeren eingesetzt werden.

Die Knöpfe mit vorzugsweise planer oder vorgebildeter konkaver Rückfläche werden in Schritt a) des erfindungsgemäßen Verfahrens z. B. nach herkömmlichen Methoden des Injektionsspritzgusses in Formwerkzeugen hergestellt. Die Knöpfe haben z. B. einen Durchmesser von 11 bis 30 mm, bevorzugt 12 bis 28 mm, wobei die oberen Werte dieser Bereiche in erster Linie für Kontaktschalen in Frage kommen und für Linsen der Durchmesser besonders bevorzugt 12,7 mm ± 0,05, beträgt. Die Dicke der Knöpfe liegt z. B. bei der Herstellung von Skeralschalen zwischen 10 und 14 mm, bei Linsen z. B. zwischen 4,5 und 5,5 mm und der Radius der konkaven Innenkurve der Knöpfe bei 7 bis 9 mm. Bei dem ersten Arbeitsschritt kommt man mit verhältnismäßig einfachen Formwerkzeugen aus; es genügen etwa 2 bis 3 verschiedene Formwerkzeuge, da nach dem erfindungsgemäßen Verfahren die Präzisionsformgebung in einem von der Knopf-Herstellung getrennten weiteren Arbeitsprozeß erfolgt. Der Vorteil ist, daß die Knöpfe in kurzer Zykluszeit unter hoher Maschinenauslastung hergestellt werden können, ohne daß auf Spannungsfreiheit und Formpräzision allzu hohe Anforderungen gestellt werden müssen, wie es sonst bei der Spritzguß-Herstellung von optischen Linsen notwendig ist. Man kann daher auf teure und empfindliche Formwerkzeuge verzichten.

Eine weitere Möglichkeit zur Herstellung von vorgefertigten Knöpfen besteht im Pressen von thermoplastischen Materialien oder im Schneiden von Rundstäben.

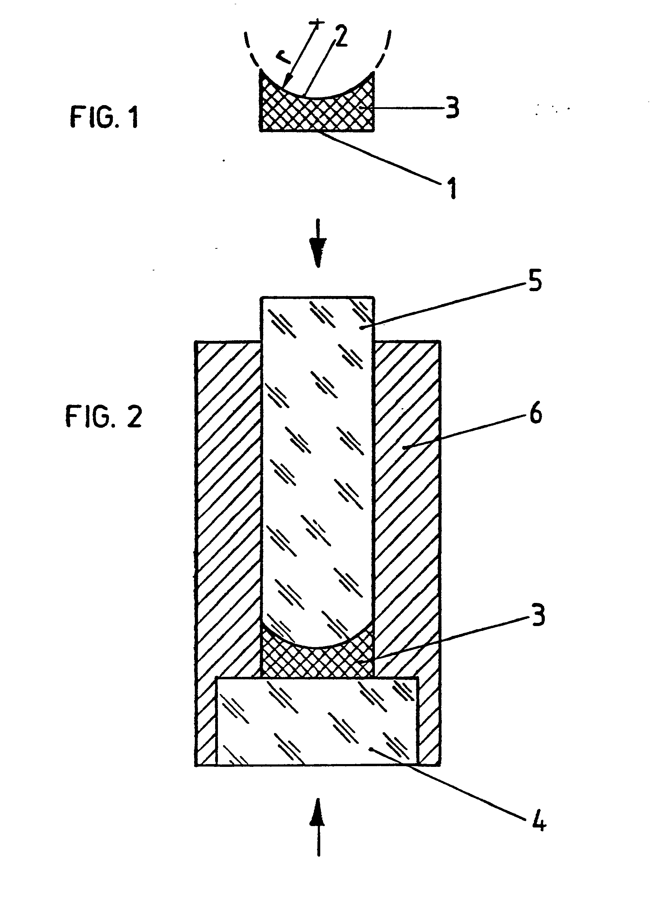

Die Abb. 1 zeigt einen Knopf 3 mit der planen Stirnfläche 1 und der konkaven Rückfläche 2 mit dem Radius r der Basiskurve. Die Stirnfläche 1 ist nicht zwingend plan, sie kann auch eine gekrümmte Fläche aufweisen. Da sie später ohnehin spanabhebend bearbeitet werden muß, bietet sich jedoch eine plane Fläche an, denn sie ist mit geringerem arbeitstechnischen Aufwand herstellbar. Der Knopf 3 wird in ein Preßwerkzeug, dargestellt in Abb. 2, eingelegt. Das Preßwerkzeug besitzt einen vorzugsweise planen Stempel 4 und einen konvexen Stempel 5, beide geführt in einer Hülse 6. Der Stempel 4 kann auf einer Unterlage aufsitzen, der Stempel 5 wird mit der notwendigen Kraft aufgedrückt, die z. B. einen Druck von 1 bis 100 bar, bevorzugt 5 bis 20 bar, auf dem Knopf 3 erzeugt. Während des Preßvorganges wird das Preßwerkzeug samt Inhalt z. B. im Luftbad oder in einem Ölbad erwärmt. Hierfür erweisen sich besonders die chemisch indifferenten Silikonöle als vorteilhaft. Die Umformtemperatur in Schritt b) des erfindungsgemäßen Verfahrens sollte bevorzugt 20 bis 80°C oberhalb der Glasübergangstemperatur des thermoplastischen Materials, jedoch noch unterhalb der Schmelzflußtemperatur liegen. Die Umformzeit beträgt in allgemeinen zwischen 5 und 120 Minuten, bevorzugt 10 bis 60 Minuten unter Temperaturbelastung. Das Werkzeug wird unter Druck abgekühlt und erst dann das Halbfertigzeug entnommen.

Die Glasübergangstemperatur läßt sich am zweckmäßigsten mittels der thermomechanischen Analyse ermitteln, bei der ein Probekörper langsam erwärmt und das Eindringen einer mit Gewichten belasteten Nadel in den Probekörper verfolgt wird. Die Glasübergangstemperatur wird durch Anlegen einer Tangente an die Eindringkurve bestimmt. Bei bestimmten optischen Polymethylmethacrylat-Gläsern liegt sie beispielsweise bei 113°C. Die Umformtemperatur im Schritt b) des erfindungsgemäßen Herstellverfahrens beträgt in diesem Fall bevorzugt 133 bis 193°C.

Die Schmelzflußtemperatur eines thermoplastischen Materials hängt nicht nur von seiner polymerchemischen Zusammensetzung, sondern auch von der mittleren Molmasse und deren Verteilung ab. Sie wird z. B. bestimmt, indem man einen Knopf auf eine ebene Unterlage legt und die Temperatur ermittelt, bei der der Knopf unter seinem eigenen Gewicht anfängt zu schmelzen bzw. zu zerlaufen.

Den erfindungsgemäßen Vorgang kann man mit einer Warmverformung vergleichen, ohne daß wie etwa bei einem Injektionsspritzguß der Zustand des Schmelzflusses erreicht wird. Ein wesentlicher Vorteil des erfindungsgemäßen Verfahrens ist, daß die Oberfläche des Stempels 5 mit hoher Präzision ohne Schwund auf das Halbfertigzeug übertragen werden kann. Der Stempel 5 besitzt die Gegengeometrie des gewünschten Halbfertigzeuges. Sie wird mit herkömmlichen Fertigungsmethoden der präzisionsmechanischen und optischen Industrie durch Schleifen und Polieren, durch Blankdrehen oder galvanisches Polieren, je nach Preßstempel-Material, aufgebracht. Der Stempel 5 besteht aus einem porenfreien, polierbaren Material, bevorzugt aus optischen Glassorten, aus Quarzglas oder auch aus Edelstählen oder Formenbaustählen.

Durch den Stempel 5 wird die Geometrie der Rückfläche, die später dem Auge zugewandt ist, vorgegeben. In die Geometrie der Stempel 5 -Oberfläche können alle derzeit verfügbaren Erkenntnisse und zukünftigen Fortschritte hinsichtlich der Kontaktlinsen-Innenkontur und der Gestaltung der randnahen Zonen (Abflachungen, Begünstigung des Tränenflüssigkeits-Austauschs usw.) eingearbeitet werden. Natürlich ist die Bearbeitung derartiger asphärischer Flächen ein erhebliches fertigungstechnisches Problem, das nur mit hohem maschinenbautechnischen Aufwand und besonderer Sorgfalt bei der Fertigung gelöst werden kann (siehe z. B. E. Heynacher: Asphärische Optik - Warum sie gefordert und wie sie gefertigt wird. Zeiss-Informationen 24, 19-25 (1978/79) Heft 88 und E. Heynacher: Fertigung und Prüfung asphärischer Flächen - Stand der Technik in der Bundesrepublik Deutschland, Feinwerktechnik und Meßtechnik 92, Heft 1 (Jan./Febr. 1984), pp. 1-5). Bei Anwendung des erfindungsgemäßen Verfahrens muß der hohe Fertigungsaufwand jedoch nicht mehr an den einzelnen Kontaktlinsen-Individuen betrieben werden, vielmehr wird es vorteilhafterweise möglich, die mit hohem Aufwand auf dem Preßstempel erzeugte (negative) Idealgeometrie der Kontaktlinsen-Innenfläche in hoher Präzision mit geringem Fertigungsaufwand und somit sehr kostengünstig auf Kontaktlinsen-Rohlinge zu übertragen.

Die von der Augenmedizin gewünschten äußerst kompliziert gekrümmten Innenflächen-Geometrien brauchen also nicht mehr in aufwendigen Verfahren gefräst, geschliffen und poliert zu werden.

Aus den erfindungsgemäß hergestellten Rohlingen lassen sich in an sich bekannter Weise wie bei konventionellen Blanks Kontaktlinsen fertigen. Dies geschieht z. B. durch Fräsen, Drehen, Schleifen und Polieren der Stirnfläche, wodurch die gewünschten Scheitelbrechwerte erzielt werden.

Die aus den nach dem erfindungsgemäßen Verfahren hergestellten Halbfertigzeugen gefertigten Kontaktlinsen zeichnen sich durch eine besonders gute Stabilität der Radien und der Rückflächen-Geometrien und einer vom Stempel 5 vorgegebenen geringen Rauhtiefe von unter 0,1 µm, bevorzugt unter 0,05 µm, aus. Wie die Untersuchung in polarisiertem Licht zeigt, weisen die erfindungsgemäß hergestellten Kontaktlinsen nur sehr schwache - und überdies symmetrische - Verspannungen auf, was wahrscheinlich für die verbesserte Formstabilität ausschlaggebend ist. Im Vergleich dazu zeigen auf konventionelle Weise (z. B. Spritzguß) erhaltene Kontaktlinsen häufig sehr deutliche und asymmetrische Verspannungen auf, deren Muster vor allem von der Fließrichtung des Spritzgutes während des Verspritzungsprozesses bestimmt wird, und die daher zu Änderungen der Geometrie während des Tragens neigen.

Als thermoplastische Materialien kommen alle mit dem Auge verträglichen transparenten Polymere in Frage, wie Celluloseester, aliphatische Carbonsäuren, Polymethylmethacrylat, Copolymere von (Meth)Acrylsäurealkyl- oder -cycloalkylestern mit z. B. Vinylpyrrolidon, aromatische Polycarbonate, transparente amorphe aromatisch/aliphatische Polyamide und aromatisch/aliphatische Polyester, Polyolefine wie z. B. Poly-1-methylpenten-4 sowie Copolymerisate von Ethylen mit Vinylacetat bzw. deren teilverseifte Produkte. Auch Polymerblends, wie sie z. B. in DE-OS 2 807 663, DE-OS 3 314 188 und US-PS 4 263 183 beschrieben sind, sind für das erfindungsgemäße Verfahren geeignet.

**Patentansprüche**

1. Verfahren zur Herstellung eines Kontaktlinsen-Halbfertigzeugs durch thermische Verformung von thermoplastischen Materialien, dadurch gekennzeichnet,

a) daß man zunächst aus dem thermoplastischen Material einen zylindrischen Knopf (3) herstellt, dessen Gewicht weitgehend jenem des herzustellenden Halbfertigzeugs entspricht,

b) daß man den Knopf (3) anschließend in ein abgeschlossenes, mit zwei einander gegenüberstehenden, in einer Hülse (6) geführten Stempeln (4, 5) versehenes Preßwerkzeug einbringt, wobei der eine Stempel (5) eine konvex gekrümmte, asphärische Oberfläche entsprechend der Innenfläche (2) der herzustellenden Kontaktlinse aufweist und

c) daß man den Knopf (3) im Preßwerkzeug unter Druck oberhalb der Glasübergangstemperatur des thermoplastischen Materials zu dem Kontaktlinsen-Halbfertigzeug mit vollständig ausgebildeter asphärischer Rückfläche umformt.

2. Verfahren nach Anspruch 1, dadurch gekennzeichnet, daß der im ersten Schritt hergestellte Knopf (3) eine plane Stirnfläche erhält.

3. Verfahren nach Anspruch 1 oder 2, dadurch gekennzeichnet, daß der im ersten Schritt hergestellte Knopf (3) eine konkave Rückfläche erhält.

4. Verfahren nach den Ansprüchen 1 bis 3, dadurch gekennzeichnet, daß die thermische Umformung während einer Zeit von 5 bis 120 Minuten, vorzugsweise 10 bis 60 Minuten, erfolgt.

5. Verfahren nach den Ansprüchen 1 bis 4, dadurch gekennzeichnet, daß das Preßwerkzeug unter Druck abgekühlt und erst dann das Halbfertigzeug entnommen wird.

6. Verfahren nach den Ansprüchen 1 bis 5, dadurch gekennzeichnet, daß die Umformtemperatur 20 bis 80°C oberhalb der Glasübergangstemperatur des thermoplastischen Materials, jedoch unterhalb dessen Schmelzflußtemperatur liegt.

7. Verfahren nach den Ansprüchen 1 bis 6, dadurch gekennzeichnet, daß der Druck beim Umformen 1 bis 100 bar, bevorzugt 5 bis 20 bar, beträgt.

**Claims**

1. Process for the production of a semi-finished contact lens by thermal deformation of thermoplastic materials, characterised in that

a) a cylindrical blank (3) is first produced from the thermoplastic material, the weight of which blank is substantially equal to the weight of the semi-finished product to be produced,

b) the blank (3) is then introduced into a closed press having two rams (4, 5) facing one another and moving in a sleeve (6), one ram having a convexly curved, aspherical surface corresponding to the internal surface (2) of the contact lens to be produced, and in that

c) the blank (3) is shaped in the press under pressure at a temperature above the glass transition temperature of the thermoplastic material to form the semi-finished contact lens with completely formed aspherical back surface.

2. Process according to claim 1, characterised in that the blank (3) produced in the first step has a plane end surface.

3. Process according to claim 1 or 2, characterised in that the blank (3) produced in the first step has a concave rear surface.

4. Process according to claims 1 to 3, characterised in that the thermal deformation takes place over a period of from 5 to 120 minutes, preferably from 10 to 60 minutes

5. process according to claims 1 to 4, characterised in that the press is cooled under pressure before the semi-finished product is removed.

6. Process according to claims 1 to 5, characterised in that the deformation temperature is 20 to 80 deg. cent. above the glass transition temperature of the thermoplastic material but below its melt flow temperature.

7. Process according to claims 1 to 6, characterised in that the pressure employed for deformation is preferably from 5 to 20 bar.

## Revendications

1. Procédé de fabrication d'un article semifini pour lentilles de contact, par formage thermique de matières thermoplastiques, caractérisé en ce que

a) on fabrique tout d'abord à partir de la matière thermoplastique un bouton cylindrique (3) dont le poids correspond largement à celui de l'article semi-fini à fabriquer,

b) on introduit le bouton (3) ensuite dans un outil de pressage fermé, pourvu de deux poinçons (4, 5) se faisant mutuellement vis-à-vis, qui sont guidés dans un manchon (6), en l'occurrence le poinçon (5) présentant une surface asphérique à courbure convexe qui correspond à la surface interne (2) de la lentille de contact à fabriquer et

c) on met en forme le bouton (3) dans l'outil de pressage sous pression, au-dessus de la température de transition vitreuse de la matière thermoplastique, pour obtenir l'article semi-fini pour lentilles de contact avec surface arrière asphérique complétement constituée.

2. Procédé selon la revendication 1, caractérisé en ce que le bouton (3) fabriqué dans le premier stade reçoit une face frontale plane.

3. Procédé selon la revendication 1 ou 2, caractérisé en ce que le bouton (3) fabriqué dans le premier stade reçoit une face arrière concave.

4. Procédé selon les revendications 1 à 3, caractérisé en ce que le formage thermique a lieu pendant une durée de 5 à 120 minutes, de préférence de 10 à 60 minutes.

5. Procédé selon les revendications 1 à 4, caractérisé en ce que l'outil de pressage est refroidi sous pression et en ce que seulement apràs l'article semi-fini est retiré.

6. Procédé selon les revendications 1 à 5, caractérisé en ce que la température de formage est de 20 à 80° C supérieure à la température de transition vitreuse de la matière thermoplastique, tout en étant cependant inférieure à la température de fusion complète de cette dernière.

7. Procédé selon les revendications 1 à 6, caractérisé en ce que la pression au cours du formage est de 1 à 100 bars, de préférence de 5 à 20 bars.

FIG. 1

FIG. 2